# EUROPÄISCHE PATENTANMELDUNG

(11) **EP 1 923 159 A1**
(43) Veröffentlichungstag der Anmeldung: **21.05.2008**
(21) Anmeldenummer: 07021805.2
(22) Anmeldetag: 09.11.2007
(51) Int. Cl.: B23B 51/02, B28D 1/14

(54) **Bohrwerkzeug mit Hartstoffkopf**

(30) Priorität: 17.11.2006 DE 102006035453
(71) Anmelder: HILTI Aktiengesellschaft, 9494 Schaan (LI)
(72) Erfinder: Assel, Thorsten, 86899 Landsberg (DE)
(74) Vertreter: Wildi, Roland

(57) **Zusammenfassung**

Ein um eine Drehachse (A) zumindest teilweise drehend antreibbares Bohrwerkzeug (1) mit einem wendelförmigen Schaft (2), an dessen axialem Schaftende (3) ein einstückiger Hartstoffkopf (4) stoffschlüssig befestigt ist, welcher zumindest vier, sich kreuzförmig radial erstreckende, Schenkel (5) mit Schneidkanten (6) aufweist, wobei die Schenkel (5) jeweils am radial äusseren Rand im Axialbereich der Schneidkante (6) eine tangentiale Verstärkung (7) aufweisen.

## Beschreibung

Die Erfindung bezeichnet ein Bohrwerkzeug mit einem Hartstoffkopf, insbesondere einen Schlagbohrmeissel für Gestein und armierten Beton zur Verwendung mit einer Handwerkzeugmaschine.

Üblicherweise weisen derartige Bohrwerkzeuge einen sich axial zu einer Drehachse erstreckenden wendelförmigen Schaft auf, an dessen maschinenseitigem Schaftende ein Einsteckende zur Aufnahme in der Handwerkzeugmaschine und am gegenüberliegenden, werkstückseitigen Schaftende ein Hartstoffkopf angeordnet ist, welcher zumeist stumpf am Stirnende des Schaftes hart aufgelötet ist.

Nach der DE2912394 ist ein Schlagbohrmeissel für Gestein mit einem einstückigen, kreuzförmigen Hartstoffkopf mit vier Radialschenkeln und einer Zentrierspitze bekannt, wobei sich jeder radial erstreckende Schenkel bis zum radial äusseren Rand gleichförmig (bezüglich eines Radialschnittes) fortsetzt.

Nach der DE10009732 sind bezüglich der beiden, sich diametral erstreckenden, Hauptschneidkanten zudem die beiden radial kürzeren Nebenschneidkanten axial zurückgesetzt.

Nach der DE10006932 bilden bei einem X-förmigen, einstückigen Hartstoffkopf die beiden Nebenschneidkanten am radial äusseren Randbereich in Drehrichtung geneigte Auflaufhilfen zur Erhöhung der Robustheit gegenüber Armierungseisentreffern aus, welche sich bis zum radial äusseren Rand gleichförmig (bezüglich eines Radialschnittes) fortsetzen.

Die Aufgabe der Erfindung besteht in der weiteren Verbesserung der Robustheit gegenüber seitlichen Armierungseisentreffern. Ein weiterer Aspekt besteht in der Angleichung der Bohrleistung über die Nennnutzungsdauer.

Die Aufgabe wird im Wesentlichen durch die Merkmale des Anspruchs 1 gelöst. Vorteilhafte Weiterbildungen ergeben sich aus den Unteransprüchen.

So weist ein um eine Drehachse zumindest teilweise drehend antreibbares Bohrwerkzeug einen wendelförmigen Schaft auf, an dessen axialem Schaftende ein einstückiger Hartstoffkopf stoffschlüssig befestigt ist, welcher zumindest vier, sich kreuzförmig radial erstreckende, Schenkel mit Schneidkanten aufweist, wobei die Schenkel jeweils am radial äusseren Rand im Axialbereich der Schneidkante eine tangentiale Verstärkung aufweisen.

Durch die tangentiale Verstärkung der Schneidkanten am radial äusseren Rand, welcher bei seitlichen Armierungstreffern besonders hoch beansprucht wird, wird die tangentiale Biegesteifigkeit der Schneidkanten erhöht und somit die Robustheit des Bohrwerkzeuges gegen seitliche Armierungseisentreffer weiter verbessert.

Vorteilhaft bildet die Verstärkung eine in Drehrichtung geneigte (ebene oder gekrümmte) Fläche aus, welche bei einem Armierungstreffer als Auflaufhilfe dient und dadurch das drehende Bohrwerkzeug antriebsseitig axial abhebt.

Vorteilhaft ist die Verstärkung tangential beidseitig, wodurch die Schneidkanten entgegen der Drehrichtung auch zusätzlich abgestützt werden, wodurch die Bruchfestigkeit der Schneidkantecke erhöht wird.

Vorteilhaft läuft die Schneidkante radial in der Verstärkung aus, wodurch am radial äusseren Rand statt derer eine in tangentialer Richtung verlaufende Verstärkungskante ausgebildet wird, die bezüglich der drehenden Beanspruchung eine besonders hohe Bruchfestigkeit und geringen Verschleiss aufweist.

Vorteilhaft bilden alle vier Schneidkanten zumindest im radial äusseren Drittel jeweils unterschiedliche Axialhüllflächen bezüglich einer Drehung um die Drehachse aus, wodurch die Schneidkanten zeitlich über die Nennnutzungsdauer nacheinander verschleissen bzw. abrasiv wirksam sind und somit die Bohrleistung über die Nennnutzungsdauer angeglichen wird.

Vorteilhaft liegt die maximale axiale Variation der Axialhüllflächen der Schneidkanten im Bereich von einem Zehntel bis zu einem Viertel des Hüllkreisdurchmessers, wodurch über eine praktisch geeignete Nennnutzungsdauer eine angeglichene Bohrleistung erzielt wird. Diese Variation kann auch ungleichmässig auf die einzelnen Schneidkanten verteilt sein.

Vorteilhaft ist im radial inneren Drittel eine Zentrierspitze mit zumindest zwei, sich radial erstreckenden, Zentrierschneidkanten vorhanden, deren Zentrieraxialhüllflächen werkstückseitig axial vor den Axialhüllflächen der Schneidkanten vorstehen, wodurch ein gutes Anbohrverhalten auch auf grob rauen Untergrund wie Beton erzielt wird.

Die Erfindung wird bezüglich eines vorteilhaften Ausführungsbeispiels näher erläutert mit:
Fig. 1a, 1b, 1c als Bohrwerkzeug 1 in Vorderansicht, Seitenansicht und Aufsicht
Fig. 2 als Einzelheit im Radialschnitt (Linie II-II in Fig. 1c)
Fig. 3 als Einzelheit in Seitenansicht (Ausschnitt III in Fig. 1a)

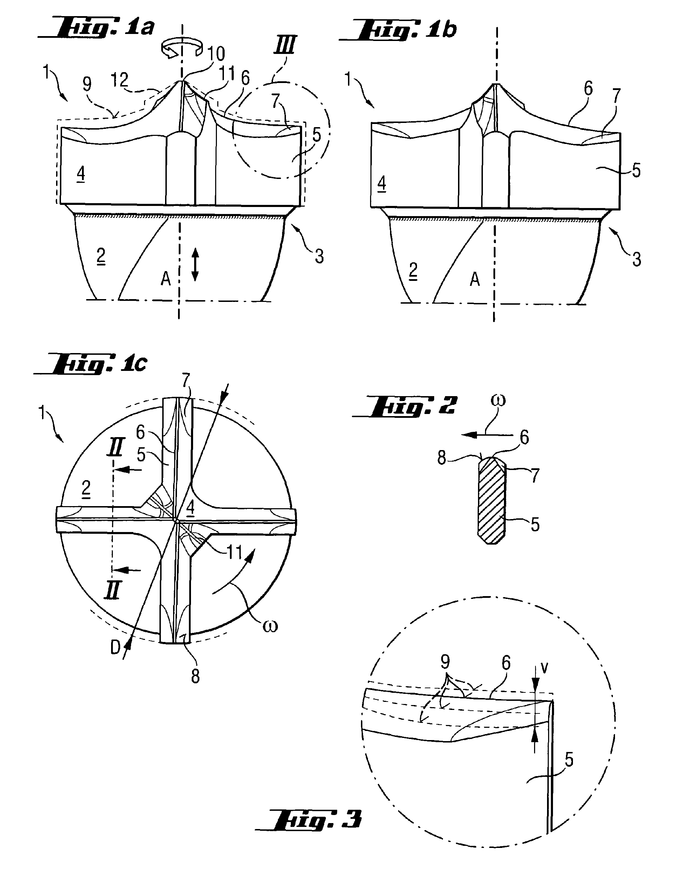

Nach den Fig. 1a, 1b, 1c weist ein um eine Drehachse A drehend und längs dieser schlagend angetreibenes Bohrwerkzeug 1 einen wendelförmigen Schaft 2 auf, an dessen axialem Schaftende 3 ein einstückiger Hartstoffkopf 4 stoffschlüssig befestigt ist. Der Hartstoffkopf 4 weist vier, sich kreuzförmig radial erstreckende, Schenkel 5 mit Schneidkanten 6 auf. Jede Schneidkante 6 läuft radial in einer Verstärkung 7 aus. Im radial inneren Drittel ist eine Zentrierspitze 10 mit zwei, sich radial erstreckenden, Zentrierschneidkanten 11 vorhanden, deren Zentrieraxialhüllflächen 12 werkstückseitig axial vor den Axialhüllflächen 9 der Schneidkanten 6 bezüglich einer Drehung um die Drehachse A vorstehen.

Nach Fig. 2 weist ein Schenkel 5 am radial äusseren Rand im Axialbereich der Schneidkante 6 eine beidseitig tangentiale Verstärkung 7 auf, welche drehrichtungsseitig insbesondere auch eine in Drehrichtung [omega] geneigte Fläche 8 ausbildet.

Nach Fig. 3 bilden alle vier Schneidkanten 6 jeweils unterschiedliche Axialhüllflächen 9 aus, wobei die maximale axiale Variation V der Axialhüllflächen 9 der Schneidkanten 6 bei einem Zehntel des Hüllkreisdurchmessers D (Fig. 1c) liegt.

## Patentansprüche

1. Ein um eine Drehachse (A) zumindest teilweise drehend antreibbares Bohrwerkzeug mit einem wendelförmigen Schaft (2), an dessen axialem Schaftende (3) ein einstückiger Hartstoffkopf (4) stoffschlüssig befestigt ist, welcher zumindest vier, sich kreuzförmig radial erstreckende, Schenkel (5) mit Schneidkanten (6) aufweist, **dadurch gekennzeichnet, dass** die Schenkel (5) jeweils am radial äusseren Rand im Axialbereich der Schneidkante (6) eine tangentiale Verstärkung (7) aufweisen.

2. Bohrwerkzeug nach Anspruch 1, **dadurch gekennzeichnet, dass** die Verstärkung (7) eine in Drehrichtung ([omega]) geneigte Fläche (8) ausgebildet ist.

3. Bohrwerkzeug nach Anspruch 1 oder 2, **dadurch gekennzeichnet, dass** die Verstärkung (7) tangential beidseitig ist.

4. Bohrwerkzeug nach einem der Ansprüche 1 bis 3, **dadurch gekennzeichnet, dass** die Schneidkante (6) radial in der Verstärkung (7) ausläuft.

5. Bohrwerkzeug nach einem der Ansprüche 1 bis 4, **dadurch gekennzeichnet, dass** alle vier Schneidkanten (6) zumindest im radial äusseren Drittel jeweils unterschiedliche Axialhüllflächen (9) bezüglich einer Drehung um die Drehachse (A) ausbilden.

6. Bohrwerkzeug nach Anspruch 5, **dadurch gekennzeichnet, dass** die maximale axiale Variation (V) der Axialhüllflächen (9) der Schneidkanten (6) im Bereich von einem Zehntel bis zu einem Viertel des Hüllkreisdurchmessers (D) liegt.

7. Bohrwerkzeug nach einem der Ansprüche 1 bis 6, **dadurch gekennzeichnet, dass** im radial inneren Drittel eine Zentrierspitze (10) mit zumindest zwei, sich radial erstreckenden, Zentrierschneidkanten (11) vorhanden ist, deren Zentrieraxialhüllflächen (12) werkstückseitig axial vor den Axialhüllflächen (9) der Schneidkanten (6) vorstehen.
